# EUROPÄISCHE PATENTANMELDUNG

(11) **EP 3 671 378 A1**
(43) Veröffentlichungstag der Anmeldung: **24.06.2020**
(21) Anmeldenummer: 18213182.1
(22) Anmeldetag: 17.12.2018
(51) Int. Cl.: G05B 19/042

(54) **DATENCONTAINER FÜR EIN STEUERSYSTEM EINER TECHNISCHEN ANLAGE**

(71) Anmelder: Siemens Aktiengesellschaft, 80333 München (DE)
(72) Erfinder: Pohlan, Rudolf, 76337 Waldbronn (DE)

(57) **Zusammenfassung**

Vorgeschlagen wird eine technische Anlage mit wenigstens einer Messstelle, wobei die Messstelle eine Mehrzahl an IO-Signalen aufweist, denen jeweils ein Datencontainer (1) in einem Steuersystem der technischen Anlage zugeordnet ist.

## Beschreibung

Die Erfindung betrifft ein Steuersystem zum Steuern einer technischen Anlage nach Anspruch 1. Außerdem betrifft die Erfindung einen Datencontainer für ein IO-Signal zur Integration in ein Steuersystem einer technischen Anlage nach Anspruch 2. Zudem betrifft die Erfindung eine technische Anlage mit wenigstens einer Messstelle, wobei die Messstelle eine Mehrzahl an IO-Signalen aufweist, nach Anspruch 3. Außerdem betrifft die Erfindung ein Verfahren zum Steuern einer technischen Anlage mittels eines Steuersystems nach Anspruch 4.

In der Automatisierungstechnik werden für die Programmierung dort eingesetzter Automatisierungsgeräte und der Beschreibung der Konfiguration der zu automatisierenden industriellen Anlage (zusammen im Folgenden als Automatisierungslösung bezeichnet) auch vorgefertigte, softwaretechnische Module eingesetzt. Beispielhaft können für diese softwaretechnischen Module sogenannte Funktionsbausteine genannt werden. Dabei handelt es sich bekanntlich um eine Kombination einer Softwarefunktionalität, z. B. einer Reglerfunktionalität, mit so genannten lokalen Daten, mit denen die jeweilige Funktionalität arbeitet. Allerdings kommen als softwaretechnische Module auch ganze Automatisierungspläne sowie Vorlagen für die Beschreibungen von Einzelsteuereinheiten sowie Beschreibungen für eine Teilanlage usw. in Betracht.

Abstrakt betrachtet handelt es sich bei diesen softwaretechnischen Modulen zunächst um sogenannte Typen (engl. types) oder Kopiervorlagen (engl. templates), die in einem softwaretechnischen Projekt, also einer die Automatisierungslösung auf einer oberen Ebene darstellenden Datenbank, durch eine so genannte Instanziierung einfach oder mehrfach und an verschiedenen Stellen zur Anwendung kommen. Zu einem Typ oder einem Template können also in einer Automatisierungslösung verschiedene Verwendungsstellen existieren, die in der Terminologie der Automatisierungstechnik als Instanz des Typs bzw. des Templates bezeichnet werden.

In der EP 2 575 034 A1 wird ein Verfahren für einen Identitätsnachweis zwischen einer Mehrzahl von in einer Baumstruktur organisierten Instanzobjekten einer Automatisierungslösung einerseits und zumindest einem Typobjekt andererseits beschrieben.

In industriellen Anlagen spielen sogenannte IO-Signale eine zentrale Rolle. Dabei wird im vorliegenden Kontext unter einem "IO-Signal" ein digitaler (binärer) oder analoger Eingabe- bzw. Ausgabekanal einer IO-Baugruppe (beispielsweise einer "ET 200 SP HA" der Firma Siemens) eines Automatisierungssystems verstanden, die von zugeordneten Messstellen einzelner Messstellen verarbeitet werden.

Unter einer "Messstelle" wird dabei ein in sich geschlossenes Messsystem verstanden, das mehrere IO-Signale aufweist, die ggf. verschiedene Signaltypen aufweisen. In der Regel werden die IO-Signale im Zusammenhang mit den einzelnen Messstellen der industriellen Anlage anlagenweit geplant und festgelegt. Dabei werden normalerweise softwaretechnische Planungswerkzeuge verwendet, um sogenannte IO-Signallisten (engl. IO-Tags) zu definieren.

Im Rahmen einer Automatisierung einer industriellen Anlage sind im Zusammenhang mit den IO-Signalen softwarebezogene und hardwarebezogene Aspekte zu berücksichtigen. Mithilfe sogenannter Engineering-Programme werden Signalverarbeitungsprogramme erstellt. Dabei werden sogenannte Signalverarbeitungsbausteine, die auch als Kanaltreiber bezeichnet werden, verwendet, die einen Eingangsrohwert eines IO-Signals in einen normierten Wert konvertieren (bzw. umgekehrt im Fall eines Signalausgangs).

Mithilfe von hardwarebezogenen Konfigurationswerkzeugen werden IO-Baugruppen für die Automatisierung der industriellen Anlage in Abhängigkeit einer Art des Eingabe- bzw. Ausgabekanals (digital/analog) und der Anzahl der IO-Signale projektiert. Für jedes einzelne IO-Signal muss dabei ein verwendetes Messverfahren bei Eingangskanälen bzw. eine Ausgabeart bei Ausgabekanälen festgelegt werden. Zusätzlich müssen weitere Parameter wie ein Messbereich oder ein Ausgabebereich, das Durchführen einer Drahtbruchprüfung oder einer Sammeldiagnose, sowie eine Eingangsverzögerung parametriert werden.

Mithilfe der IO-Signallisten kann eine hardware- und softwarebezogene Zuordnung erfolgen, indem für jedes IO-Signal eine Hardwareadresse spezifiziert und ein symbolischer Name für das Softwareprogramm festgelegt wird. Dadurch kann einem softwarebezogenen Signalverarbeitungsbaustein ein konkreter hardwarebezogene Eingangs- oder Ausgangskanal zugeordnet werden. Dieser Vorgang ist jedoch sehr zeitaufwändig und fehleranfällig und muss zudem bei jeder Projektierung von Neuem durchgeführt werden. Zudem werden die softwarebezogenen und hardwarebezogenen Daten eines IO-Signals aktuell von getrennten Programmen erfasst und gespeichert. Die hieraus resultierende Unübersichtlichkeit kann eine Fehlerhäufigkeit bei der Projektierung deutlich erhöhen.

Bekannt sind softwaretechnische Generatoren, die Messstellen automatisch anhand von Tabellen (beispielsweise im Excel-Format) erzeugen. Dabei können in der Regel auch software- und hardwarebezogene Parameter festgelegt werden. Nachteilig hierbei ist, dass beim Erstellen der Tabellen eine hohe Aufmerksamkeit und ein beträchtlicher zeitlicher Arbeitsaufwand vonnöten sind. Noch gravierender ist, dass vor einer Inbetriebnahme der industriellen Anlage nur unzureichende Möglichkeiten einer Konsistenz- bzw. Plausibilitätsprüfung der festgelegten Parameter erfolgen kann.

Der Erfindung liegt die Aufgabe zugrunde, ein Steuersystem für eine technische Anlage und einen dazugehörigen Datencontainer anzugeben, die eine Fehlersicherheit bei einer Projektierung der technischen Anlage erhöhen.

Diese Aufgabe wird gelöst durch ein Steuersystem zum Steuern einer technischen Anlage nach Anspruch 1. Das Steuersystem weist eine IO-Kanalschnittstelle zum Auslesen eines IO-Signals aus einem separaten Gerät und/oder zum Ausgeben eines IO-Signals in das separate Gerät auf. Zudem weist das Steuersystem einen computerimplementierten Datencontainer (zur Integration des IO-Signals in das Steuersystem) auf. Der Datencontainer weist folgende Komponenten auf:
- ein erstes Datenobjekt, das eine abstrakte hardwarebezogene Konfiguration des IO-Signals zu der IO-Kanalschnittstelle des Steuersystems umfasst;
- ein zweites Datenobjekt, das eine konkrete hardwarebezogene Konfiguration des IO-Signals bezüglich einer IO-Kanalschnittstelle für das separate Gerät umfasst;
- ein drittes Datenobjekt, das eine abstrakte softwarebezogene Konfiguration des IO-Signals bezüglich der IO-Kanalschnittstelle des Steuersystems umfasst;
- ein viertes Datenobjekt, das eine konkrete softwarebezogene Konfiguration des IO-Signals bezüglich der IO-Kanalschnittstelle des Geräts umfasst.

Ein Gerät ist vorliegend entweder Erzeuger oder Empfänger eines oder mehrerer analoger oder binärer Signale. Beispiele für derartige Geräte sind Messumformer, binäre Sensoren oder Stellventile mit einem Stellungsregler. Im Fall einer technischen Anlage, dem sogenannten "Feld", spricht man in diesem Zusammenhang von Feldgeräten.

Bei der abstrakten hardwarebezogenen Konfiguration des IO-Signals bezüglich der IO-Kanalschnittstelle des Steuersystems kann es sich im Falle eines Eingangssignals um Parameter wie eine Messart oder einen Messbereich handeln. Im Fall eines Ausgangssignals kann es sich um Parameter wie eine Ausgabeart oder einen Ausgabebereich handeln. Die hardwarebezogene Konfiguration ist dabei "abstrakt", womit gemeint ist, dass sich die Konfiguration auf kein bestimmtes Gerät oder dergleichen bezieht, sondern allgemeingültig ist.

Die abstrakte hardwarebezogene Konfiguration des IO-Signals bezüglich der IO-Kanalschnittstelle enthält bei Eingangssignalen typischerweise kanalbezogene Hardware-Parameter wie ein Signaltyp (Analog/Digital), eine Messart (z.B. Strom 2-Draht), ein Messbereich (z.B. 4-20mA), das Vorliegen eines HART-Protokolls (Ja/Nein). Im Falle von Ausgangssignalen kann es sich um Hardware-Parameter wie eine Ausgabeart (Strom/Spannung) oder ein Ausgabebereich (z.B. 4-20mA) handeln.

Korrespondierend hierzu umfasst das zweite Datenobjekt eine konkrete hardwarebezogene Konfiguration bezüglich der IO-Kanalschnittstelle des separaten Geräts (beispielsweise Sensors oder Aktors). Der Begriff "konkret" meint hierbei, dass sich die Konfiguration sich auf ein bestimmtes Gerät, insbesondere Feldgerät, oder einen bestimmten Gerätetyp oder auf Geräte eines bestimmten Herstellers bezieht.

Bei der konkreten hardwarebezogenen Konfiguration des IO-Signals bezüglich der IO-Kanalschnittstelle des separaten Geräts kann es sich um die gleichen Hardware-Parameter (evtl. in anderer Notation) wie bei der abstrakten hardwarebezogenen Konfiguration handeln. Es können aber auch zusätzliche Hardware-Parameter wie für Diagnosefunktionen (Drahtbrucherkennung, Diagnose Überlauf/Unterlauf), HART-Diagnose, etc. umfasst sein.

Die "konkreten" Hardware-Parameter sind eine Abbildung der abstrakten Hardware-Parameter bzw. es existiert eine Abbildungsvorschrift, die die abstrakte Konfiguration auf die konkrete Konfiguration abbildet.

Bei der abstrakten softwarebezogenen Konfiguration des IO-Signals bezüglich der IO-Kanalschnittstelle des Steuersystems kann es sich um Parameter wie einen unteren oder oberen Skalierungswert des IO-Signals, oder eine Einheit bei Analogsignalen handeln.

Bei der konkreten softwarebezogenen Konfiguration des IO-Signals bezüglich der IO-Kanalschnittstelle für das separate Gerät kann es sich beispielsweise um einen Signalverarbeitungsbaustein bzw. ein Signalverarbeitungsprogramm handeln. Ein Signalverarbeitungsbaustein wird auch als Kanaltreiber bezeichnet und wandelt einen Eingangsrohwert des IO-Signals in einen normierten Wert (bzw. umgekehrt im Fall eines Ausgangssignals).

Außerdem wird die Aufgabe gelöst durch einen Datencontainer für ein IO-Signal zur Integration in ein Steuersystem einer technischen Anlage nach Anspruch 2. Das Steuersystem weist eine IO-Kanalschnittstelle zum Auslesen des IO-Signals aus einem separaten Gerät und/oder zum Ausgeben des IO-Signals in das separate Gerät auf. Der Datencontainer umfasst, wie zuvor bereits beschrieben, folgende Datenobjekte:
- - ein erstes Datenobjekt, das eine abstrakte hardwarebezogene Konfiguration des IO-Signals zu der IO-Kanalschnittstelle des Steuersystems umfasst;
- ein zweites Datenobjekt, das eine konkrete hardwarebezogene Konfiguration des IO-Signals bezüglich einer IO-Kanalschnittstelle für das separate Gerät umfasst;
- ein drittes Datenobjekt, das eine abstrakte softwarebezogene Konfiguration des IO-Signals bezüglich der IO-Kanalschnittstelle des Steuersystems umfasst;
- ein viertes Datenobjekt, das eine konkrete softwarebezogene Konfiguration des IO-Signals bezüglich der IO-Kanalschnittstelle des Geräts umfasst.

Die Aufgabe wird zudem gelöst durch eine technische Anlage gemäß Anspruch 3. Die technische Anlage umfasst wenigstens eine Messstelle, wobei die Messstelle eine Mehrzahl an IO-Signalen aufweist. Jedem IO-Signal ist ein Datencontainer zugeordnet, welcher wie zuvor erläutert ausgebildet ist.

Unter einer "Messstelle" wird dabei ein in sich geschlossenes Messsystem verstanden, das mehrere IO-Signale aufweist, die ggf. verschiedene Signaltypen aufweisen. In der Regel werden die IO-Signale im Zusammenhang mit den einzelnen Messstellen der industriellen Anlage anlagenweit geplant und festgelegt. Dabei werden normalerweise softwaretechnische Planungswerkzeuge verwendet, um sogenannte IO-Signallisten (engl. IO-Tags) zu definieren.

Außerdem wird die Aufgabe gelöst durch ein Verfahren zum Steuern einer technischen Anlage mittels eines Steuersystems, wobei ein Datencontainer, der gemäß einem der Ansprüche ausgebildet ist, dazu verwendet wird, IO-Signale und/oder Messstellen der technischen Anlage in das Steuersystem zu integrieren.

Durch die erfindungsgemäße Ausbildung des Steuersystems bzw. die Vorsehung und Verwendung des erfindungsgemäßen Datencontainers ist eine instanzspezifische Parametrierung eines IO-Signals nicht mehr notwendig. Vielmehr wird bereits im Vorfeld einer Projektierung der technischen Anlage eine umfassende technische Beschreibung des IO-Signals und dessen Integration in das Steuersystem geleistet, die dann bei der eigentlichen Projektierung zur Verfügung steht. Die Projektierung wird hierdurch deutlicher robuster und weniger fehleranfällig. Eine weiterer Vorteil besteht darin, dass sich bei einem Datencontainer eines bestimmten IO-Signaltyps vorgenommene Änderungen einfach auf alle später bei der Projektierung verwendeten IO-Signale dieses Typs auswirken, so dass sich auf der einen Seite eine aufwandsärmere und auf der anderen Seite automatisch konsistente Projektierung ergibt. Zudem lässt sich die Projektierung des technischen Systems mithilfe des erfindungsgemäßen Datencontainers einfach validieren. Dieser Aspekt ist besonders für validierungspflichtige technische Anlagen (wie beispielsweise in der Chemie- oder Pharmabranche) von hoher Bedeutung.

Eine Konsistenzprüfung der Projektierung lässt sich vorteilhafterweise folgendermaßen durchführen. In einem ersten Schritt wird ein bestimmter (IO-)Signaltyp mit allen Messstellentypen verglichen. Hierdurch erhält man einen Überblick, bei welchen Messstellentypen ggf. welche Unterscheide im Vergleich zu dem originären Signaltyp bestehen. Dieser Vergleich ist insbesondere für die Validierung hilfreich, dann sich einfach nachprüfen lässt, ob die Signaltypen/Messstellentypen in einer korrekten Beziehung zueinanderstehen. In einem zweiten Schritt wird der eigentliche Abgleichvorgang durchgeführt. Änderungen in dem originären IO-Signaltyp werden dabei in den Messstellentypen übernommen, in denen der bestimmte IO-Signaltyp verwendet wird. Zuletzt werden die Änderungen in den Messstellentypen auch bei allen instanziierten Messstellen automatisch übernommen.

Dieselben Vorteile betreffen auch die erfindungsgemäß ausgebildete technische Anlage mit wenigstens einer Messstelle, die eine Mehrzahl an IO-Signalen aufweist, die ggf. verschiedene Typen aufweisen. Durch die Erfindung ist es möglich, dass bereits im Vorfeld der Projektierung die von den Messstellen umfassten IO-Signale samt der umklammernden Messstelle mittels einer einzigen typbasierten Beschreibung erfasst sind und daher einfach in die Projektierung integriert bzw. instanziiert werden können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

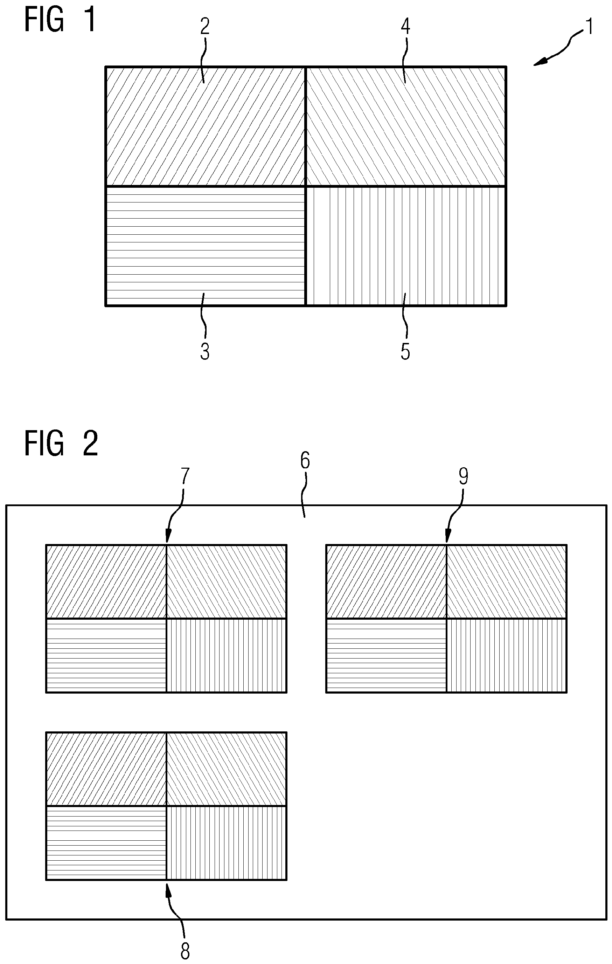

In FIG 1 ist ein erfindungsgemäßer Datencontainer 1 für ein IO-Signal dargestellt, das vom Typ "Temperaturmessung" ist. Der Datencontainer 1 umfasst ein erstes Datenobjekt 2, ein zweites Datenobjekt 3, ein drittes Datenobjekt 4 und ein viertes Datenobjekt 5.

Das erste Datenobjekt 2 umfasst eine hardwarebezogene Konfiguration des IO-Signals zu einer IO-Kanalschnittstelle (nicht dargestellt) eines Steuersystems (nicht dargestellt). Bei dem Steuersystem kann es sich beispielsweise um das Prozessleitsystem "PCS 7" der Firma Siemens handeln.

Das IO-Signal kann ein Eingangssignal für das Steuersystem sein, d.h. es wird von diesem über die IO-Kanalschnittstelle empfangen. Alternativ kann das IO-Signal auch ein Ausgangssignal sein, das von der IO-Kanalschnittstelle des Steuersystems ausgegeben wird. Die hardwarebezogene Konfiguration kann beispielsweise eine Messart oder ein Messbereich des IO-Signals sein. Weitere Beispiele sind: "Glättung vorhanden", "Datentyp", "Kanal-Signaltyp" oder "Grenzwerte".

Das zweite Datenobjekt 3 umfasst eine hardwarebezogene Konfiguration des IO-Signals bezüglich einer IO-Kanalschnittstelle (nicht dargestellt) eines separaten, d.h. von dem Steuersystem verschiedenen Geräts (nicht dargestellt). Das IO-Signal kann dabei ein Eingangssignal für das separate Gerät sein, d.h. es wird von diesem über dessen IO-Kanalschnittstelle empfangen.

Alternativ kann das IO-Signal auch ein Ausgangssignal des Geräts sein, das von der IO-Kanalschnittstelle des Geräts ausgegeben wird. Die hardwarebezogene Konfiguration kann beispielsweise eine Messart oder ein Messbereich des separaten Geräts sein.

Die im zweiten Datenobjekt 3 enthaltene hardwarebezogene Konfiguration des IO-Signals muss nicht zwingend verschieden von der im ersten Datenobjekt 2 enthaltenen hardwarebezogenen Konfiguration es IO-Signals sein. Vielmehr können beide teilweise oder sogar vollständig identisch sein.

Das dritte Datenobjekt 4 umfasst eine abstrakte softwarebezogene Konfiguration des IO-Signals bezüglich der IO-Kanalschnittstelle des Steuersystems. Bei der softwarebezogenen Konfiguration handelt es sich beispielsweise um Attribute wie "Einheit", "Skalierungswerte" oder "Variablentyp". Es handelt sich im Wesentlichen um eine technologische Beschreibung des IO-Signals, z.B. Temperatur gemessen in Grad Celsius.

Das vierte Datenobjekt 5 umfasst eine konkrete, z.B. herstellerabhängige softwarebezogene Konfiguration des IO-Signals bezüglich der IO-Kanalschnittstelle des Geräts. Hierbei umfasst die konkrete softwarebezogene Konfiguration einen Kanaltreiberbaustein.

Der Kanaltreiberbaustein, auch als Kanalbaustein bezeichnet, wird geräteabhängig in einer Software-Bibliothek des Steuersystems bereitgestellt und für die Programmierung der Signalwandlung (Rohwert in normierten Wert bei Eingangssignalen bzw. umgekehrt bei Ausgangssignalen) eingesetzt. Typischerweise wird der normierte Wert am Kanalbaustein mit dem Prozesswerteingang bzw. -ausgang eines sogenannten technologischen Bausteins (Motor-, Ventil- oder Reglerbaustein, etc.) verschaltet.

FIG 2 zeigt einen Datencontainer 6 einer Messstelle, die vom Typ "Ventilsteuerung" ist. Die Messstelle weist zwei als Eingangssignale ausgebildete bzw. vorgesehene IO-Signale und ein als Ausgangssignal ausgebildetes bzw. vorgesehenes IO-Signal auf. Entsprechend sind in FIG 2 drei Datencontainer 7, 8, 9 dargestellt, die wiederum Teil des Datencontainers 6 der Messstelle sind. Die zwei auf der linken Seite dargestellten Datencontainer 7, 8 sind den beiden Eingangssignal-Containern zugeordnet und weisen den Typ "Rückmeldung Ventil geöffnet (engl. feedback valve opened)" bzw. "Rückmeldung Ventil geschlossen (engl. feedback valve closed)" auf. Der rechte Datencontainer 9 ist dem Ausgangssignalcontainer zugeordnet und weist den Typ "Steuerausgang Ventil (engl. control)" auf.

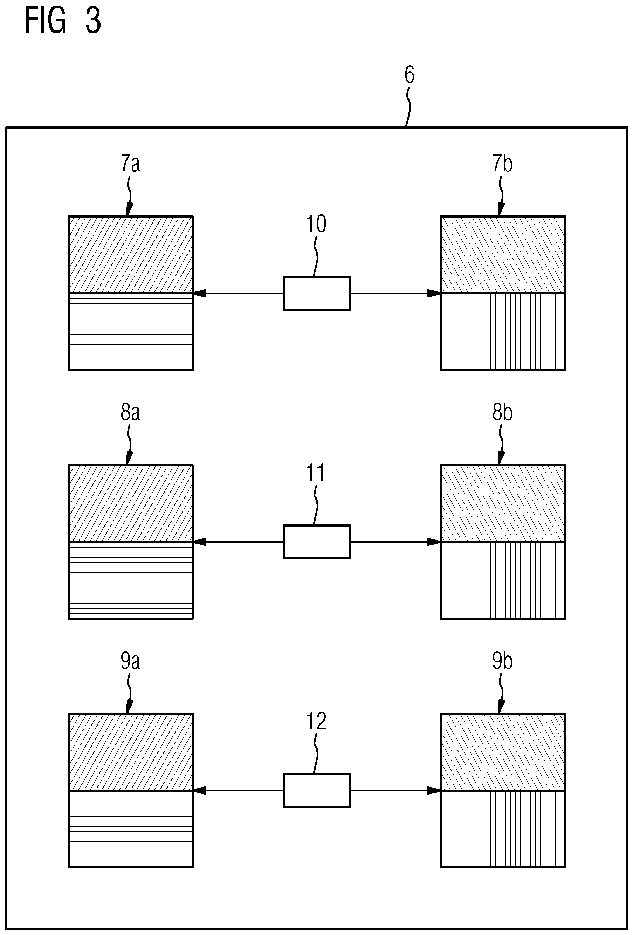

Durch die Verwendung von erfindungsmäßen Datencontainern 7, 8, 9 kann auf einfache Art und Weise eine Konsistenzprüfung der bereits instanziierten Messstellen(typen) vorgenommen werden. FIG 3 veranschaulicht hierzu, wie die einzelnen hardwarebezogenen Datenobjekte 7a, 8a, 9a der drei in der Messstelle integrierten IO-Signaltypen mit den einzelnen softwarebezogenen Datenobjekten 7b, 8b, 9b über sogenannte IO-Tags 10, 11, 12 verbunden werden.

Die Konsistenzprüfung beinhaltet sowohl den Hardware-Aspekt (hardwarebezogene Datenobjekte 7a, 8a, 9a) als auch den Software-Aspekt (softwarebezogene Datenobjekte 7b, 8b, 9b). Die Zusammengehörigkeit des Hardware- und Software-Aspekts wird dabei mithilfe der IO-Tags 10, 11, 12 ermittelt. Die IO-Tags 10, 11, 12 enthalten einen Bezug zum konkreten Hardware-Kanal eines Geräts und einen Bezug zum konkreten softwarebezogenen Signaleingang- bzw. -ausgang des Geräts. Die Konsistenzprüfung eines Messstellentyps berücksichtigt dabei alle inkludierten Signalinstanzen mit den Aspekten Software und Hardware, indem mit Hilfe der IO-Tags 10, 11, 12 die jeweiligen Datenobjekte 7a, 8a, 9a, 7b, 8b, 9b ermittelt und in einem Vergleich gegenübergestellt werden.

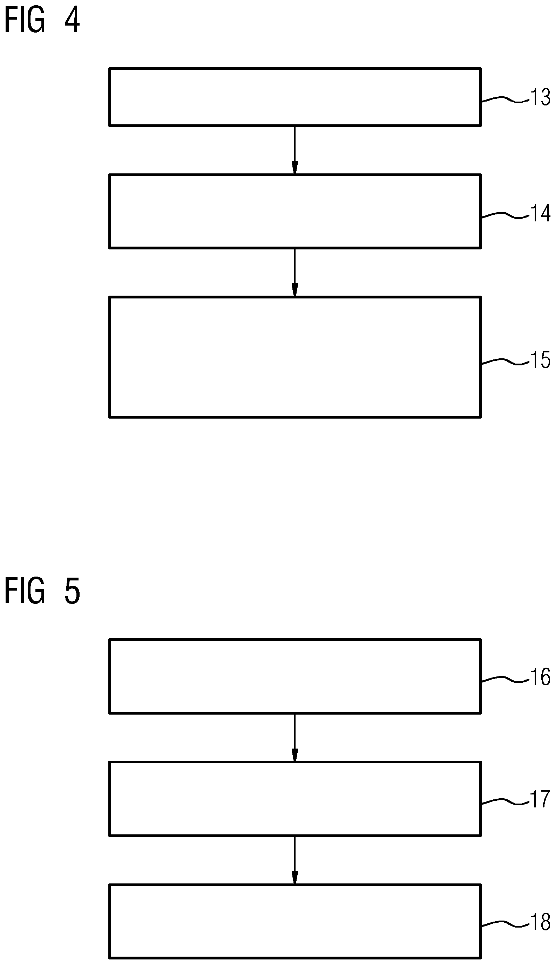

In FIG 4 ist ein Ablauf einer konsistenten Projektierung einer Messstelle einer technischen Anlage in einem Steuersystem der technischen Anlage dargestellt. In einem ersten Schritt 13 werden verschiedene in der technischen Anlage einsetzbare Typen von IO-Signalen definiert und entsprechende Datencontainer 1 erstellt. Diese Datencontainer 1 werden anschließend in einem zweiten Schritt 14 in einen Datencontainer 6 einer Messstelle integriert - davon abhängig, welche Typen von IO-Signalen in der Messstelle beinhaltet sein sollen. In einem dritten Schritt 15 werden die zuvor erstellten Datencontainer 6 der Messstelle im Rahmen der eigentlichen Projektierung zum sogenannten Instanziieren der Messstelle verwendet. Dabei werden die zugeordneten IO-Tags 10, 11, 12 den instanziierten Messstellen zugeordnet.

In FIG 5 ist dargestellt, wie Änderungen an Parametern der einzelnen Typen von IO-Signalen vorgenommen werden. In einem ersten Schritt 16 werden die eigentlichen Änderungen in den hardware- und/oder softwarebezogenen Konfigurationen der einzelnen Datenobjekte 2, 3, 4, 5 vorgenommen. Die in den einzelnen (Stamm-)Typen der IO-Signale vorgenommenen Änderungen werden in einem zweiten Schritt 17 automatisch in den (Stamm-)Messstellen(-typen) übernommen, in deren Datencontainer 6 die geänderten Datencontainer 1 enthalten sind. In einem dritten Schritt 18 werden die Änderungen dann automatisch in den instanziierten Messstellen übernommen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuersystem zum Steuern einer technischen Anlage mit einer IO-Kanalschnittstelle zum Auslesen eines IO-Signals aus einem separaten Gerät und/oder zum Ausgeben eines IO-Signals in das separate Gerät, welches einen computerimplementierten Datencontainer (1) aufweist, der Datencontainer (1) umfassend:
- ein erstes Datenobjekt (2), das eine abstrakte hardwarebezogene Konfiguration des IO-Signals bezüglich der IO-Kanalschnittstelle des Steuersystems umfasst,
- ein zweites Datenobjekt (3), das eine konkrete hardwarebezogene Konfiguration des IO-Signals bezüglich einer IO-Kanalschnittstelle für das separate Gerät umfasst,
- ein drittes Datenobjekt (4), das eine abstrakte softwarebezogene Konfiguration des IO-Signals bezüglich der IO-Kanalschnittstelle des Steuersystems umfasst,
- ein viertes Datenobjekt (5), das eine konkrete softwarebezogene Konfiguration des IO-Signals bezüglich der IO-Kanalschnittstelle für das separate Gerät umfasst.

2. Datencontainer (1) für ein IO-Signal zur Integration in ein Steuersystem einer technischen Anlage, wobei das Steuersystem eine IO-Kanalschnittstelle zum Auslesen des IO-Signals aus einem separaten Gerät und/oder zum Ausgeben des IO-Signals in ein separates Gerät aufweist, der Datencontainer (1) umfassend:
- ein erstes Datenobjekt (2), das eine abstrakte hardwarebezogene Konfiguration des IO-Signals bezüglich der IO-Kanalschnittstelle des Steuersystems umfasst,
- ein zweites Datenobjekt (3), das eine konkrete hardwarebezogene Konfiguration des IO-Signals bezüglich einer IO-Kanalschnittstelle für das separate Gerät umfasst,
- ein drittes Datenobjekt (4), das eine abstrakte softwarebezogene Konfiguration des IO-Signals bezüglich der IO-Kanalschnittstelle des Steuersystems umfasst,
- ein viertes Datenobjekt (5), das eine konkrete softwarebezogene Konfiguration des IO-Signals bezüglich der IO-Kanalschnittstelle für das separate Gerät umfasst.

3. Technische Anlage mit wenigstens einer Messstelle, wobei die Messstelle eine Mehrzahl an IO-Signalen aufweist, denen jeweils ein Datencontainer (1) gemäß Anspruch 2 in einem Steuersystem der technischen Anlage zugeordnet ist.

4. Verfahren zum Steuern einer technischen Anlage mittels eines Steuersystems, wobei ein Datencontainer (1, 6), der gemäß einem der Ansprüche ausgebildet ist, dazu verwendet wird, IO-Signale und/oder Messstellen der technischen Anlage in das Steuersystem zu integrieren.
